# EUROPEAN PATENT APPLICATION

(11) **EP 3 363 706 A1**
(43) Date of publication of application: **22.08.2018**
(21) Application number: 17382085.3
(22) Date of filing: 21.02.2017
(51) Int. Cl.: B60W 50/08, G06Q 20/30, B60W 50/00, B60R 16/037, G07B 15/06, B60W 50/14

(54) **METHOD AND SYSTEM FOR ACTIVATING AT LEAST ONE FUNCTION OF A VEHICLE**

(71) Applicant: Seat, S.A., 08760 Martorell (ES)
(72) Inventor: Redondo Ruiz, David, 08762 BARCELONA (ES); Rodriguez Bosch, Ruben, 08760 BARCELONA (ES); Bayona Margarit, Teresa, 08760 BARCELONA (ES); Baños Serradilla, Victor, 08760 BARCELONA (ES)
(74) Representative: Isern Patentes y Marcas S.L.

(57) **Abstract**

Method and system for activating at least one function of a vehicle (1), including the steps for identifying at least one need of at least one user of the vehicle (1), evaluating activation of the at least one deactivated function (2), suggesting activation of same if the need of the user is satisfied, determining an activation instruction, requesting activation from an external server (10), receiving authorization to activate same, in which authorization is issued by the external server (10), and activating the at least one disabled function (2) of the vehicle (1) enabling the system to propose functionality that facilitates driving, while proposing new options unknown to the user as same are created. This provides a system able to recognize functions recommended for certain situations, manage suggestions and recommend activation of a function (2) in real time.

## Description

### PURPOSE OF THE INVENTION

The present patent application relates to a method for activating at least one function of a vehicle according to Claim 1, incorporating notable innovations and advantages, and a system for activating at least one function of a vehicle according to Claim 15, also incorporating notable innovations and advantages.

### BACKGROUND TO THE INVENTION

The current trend in the automobile sector is to offer vehicle users a series of functions intended to improve driving quality. Car manufacturers offer a wide variety of functions and/or aids that customers can choose to add when buying a new vehicle. The cost of such aids and/or functions can be high. Accordingly, customers pay an additional cost when buying the new vehicle in order to incorporate such aids.

It is common for many such purchased aids not to be commonly used, or even for the vehicle user to be unaware of the existence of such aids in the vehicle and/or of how they work. Such unawareness is common, for example in hire cars, where customers used the vehicle for just a few days and are unaware of the operation and/or the existence of many of the functions and/or aids provided by the vehicle.

To address this problem, a device and a method for outputting items of information regarding a vehicle, in particular regarding a vehicle function, in order to provide the driver with improved knowledge of the functions provided by said vehicle is known in the prior art, as disclosed in document US2013049943A. The items of information can be stored retrievably, and each item of information is given a priority.

The main features of said device and of the method are as follows:
- Memory support for storing information on the functions of the vehicle,
- Means for determining the workload or level of the driver,
- Ability to evaluate the priority of the information on the functions of the vehicle,
- Ability to recommend functionality of the vehicle.

Accordingly, the objective of said device and of the related method is to provide information to the driver regarding the vehicle, and in particular regarding the functions of same and the option of using said functions, in particular if said functions are unknown to the user. Vehicle environment and vehicle operation are analysed to recommend the use of particular functions. To do so, suggestions are provided so that said functions can be used and the user gets used to using said functions.

The method disclosed in said document is intended to ensure that the user has a low stress all work load, and to suggest the functions identified as having a higher priority.

Consequently, there remains a need for a method and a system for activating at least one function of a vehicle to enable the system not only to propose functionality to facilitate driving at times of low stress for the user, but also to propose new options unknown to the user as they are created.

### DESCRIPTION OF THE INVENTION

The present invention comprises a method and system for activating at least one function of a vehicle, suggesting the enabling and activation of applications and/or aids as appropriate.

The present invention is based on a vehicle that incorporates a set of functions or aids. Some of these functions or aids are activated and others are deactivated.

Traditionally, deactivated functions can be activated directly by the vehicle itself, i.e. the user requests activation of the function and the vehicle enables said function. Conversely, deactivated functions may be activated indirectly by an external server outside the vehicle, i.e. the user requests activation of the function, a server verifies the request, sends authorization to the vehicle to activate the function and, finally, the vehicle enables said function. It should be noted that, in both cases, all of the sensors, control units, actuators and everything else required to implement the plurality of deactivated functions are already installed in the vehicle itself.

The difference lies in how said functions are enabled and how said functions are acquired by the user. Enabling via an external server has certain additional advantages, as described below in the present description. With regard to the acquisition method, the traditional method for acquiring the plurality of functions or aids is to request and pay for all of the functions that the user wants at the time the new vehicle is purchased. Advantageously, in the acquisition method according to the present invention, the user requests and pays only for using the functions that are wanted and at the time they are wanted, thereby reducing the initial purchase price of the vehicle and increasing the value for a second purchaser. Thus, the second user of the vehicle can request and pay for only those functions that they want, independently of the functions acquired and paid for initially by the original purchaser. A similar consideration applies to hire cars, where each user can request and pay for those aids that they want at the time that they need them.

As such, the method according to the present invention includes a list of on-demand functions, "on-demand functions" meaning functions that can be activated at the express request of the current user of the vehicle, and which can be activated and deactivated at any time. Said on-demand functions are linked to a need, where the need is identified using sensors in the vehicle, and by the information received from the external sensors.

Activation of the at least one function of the vehicle includes actions or steps in which, firstly, a need that has not been satisfied by the user of the vehicle is identified, the possibility of activating the at least one function satisfying said need is evaluated and, if the outcome is positive, activation of the at least one function is suggested to the user. Subsequently, the user accepts the suggestion proposed and the system enables communication between the vehicle and an external server, requesting activation of the function. Once the request has been verified and approved, the external server authorizes activation of the function, and the function is activated in the vehicle. Additionally, the method may include payment and Verification of the payment prior to acceptance of the request, in addition to downloading at least one update related to the at least one function available on the vehicle. Furthermore, the method may optionally include proposing new functions unknown to the user as such functions are created.

More specifically, the method for activating at least one function of a vehicle, which includes at least one disabled function, said activation method includes the following steps:
- Identifying at least one need of at least one user of the vehicle,
- Evaluating activation of the at least one disabled function,
- Suggesting activation of the at least one disabled function if activation of the at least one disabled function satisfies the at least one identified need of the at least one user,
- Determining an activation instruction for the at least one disabled function, in which the activation instruction is generated by the at least one user,
- Requesting activation of the at least one disabled function from an external server,
- Receiving authorization to activate the at least one disabled function, in which authorization is issued by the external server, and
- Activating the at least one disabled function of the vehicle.

This enables the user of the vehicle to be offered functions involving services or information that could assist with driving or provide entertainment, inter alia, satisfying specific needs of the user of the vehicle. The user may optionally request activation of same in order to start using the service or to obtain the information available from said function.

Function means a service offered by the vehicle to the user in the form of the provision of information or data from inside or outside the vehicle, or in the form of controllers or actuators able to activate or deactivate devices on the vehicle, or to modify the variables of same. By way of non-limiting example, function means a driving aid, the provision of information, an electronic vehicle comfort system, inter alia.

Enabled function means a function that is active and offers a service to the user at that given moment. A disabled function is a function that the user is not permitted to access or use, and as such is not available and the services provided by the same cannot be used by the user.

Furthermore, the function may satisfy a need of any of the users of a vehicle, be it the driver or any of the passengers.

According to another aspect of the invention, the step identifying at least one need of at least one user of the vehicle involves analysing a signal from at least one sensor in the vehicle and/or analysing at least one datum from outside the vehicle and/or analysing a state of at least one user of the vehicle, such that the system and method according to the invention includes information relating to the vehicle and the vehicle environment, and even relating to the user, when suggesting or not suggesting certain functions, thereby improving accuracy and timeliness when identifying the existence of an unsatisfied need of any of the users of the vehicle.

Advantageously, the step identifying at least one need of at least one user of the vehicle also involves predicting the at least one need of the at least one user of the vehicle. Thus and as a function of the information available, the system executing the method according to the invention anticipates the needs of the user in order to offer the most relevant and necessary function at any given time. Thus, the method is able to anticipate the appearance of the at least one need of the at least one user, potentially obviating risk situations and tiredness, inter alia.

On the other hand, the at least one need of the at least one user of the vehicle is predicted on the basis of activation of at least one disabled function by at least one second vehicle, in which activation of at least one disabled function by the at least one second vehicle is supplied by the external server. A second vehicle means a different vehicle, i.e. a vehicle in the surrounding area. This enables information relating to other vehicles in the surrounding area to be used, along with the functions that are being enabled from said vehicles, given that the respective systems of same may have detected the need and relevance of a given function. Additionally, the vehicle according to the invention and the second vehicle are compared to determine whether they are subject to similar conditions, for example position, driver state of mind, etc.

On-demand functions enable car functions to be activated in response to the existence of a one-off need. Nonetheless, the systems in modern vehicles have shortcomings in terms of recognizing potentially suitable or future functions and proposing same under certain conditions. Consequently, modern systems can only manage suggestions and recommendations for activating at least one function in real time, once the need has become latent. Linking to at least one external server makes it possible to predict and anticipate detection of the need before the need arises.

Additionally, the at least one need of the at least one user of the vehicle is on the basis of an activation log of the at least one disabled function of the vehicle. This enables information contained in the log to be used, given that this information may provide clues regarding driving patterns or habits that may be repeated. The log is stored in at least one information storage means of the vehicle.

According to the activated information log, the method according to the present invention incorporates awareness of the preferences of the driver, and defines and adjust certain thresholds to issue the recommendation to activate on-demand functions. Consequently, the step suggesting activation of the at least one disabled function depends on a threshold value, such that when the at least one identified need of the at least one user is greater than a threshold value, activation of the at least one disabled function is suggested. The method includes an additional step adjusting the threshold value as a function of the activation log of the at least one disabled function of the vehicle.

As an alternative to said activation threshold, activation may be dependent on a trigger event, such that if a predetermined signal is received from a sensor, the method according to the present invention suggests activation of the at least one disabled function. This condition is particularly relevant for activating vehicle safety functions.

According to another aspect of the invention, the vehicle includes an identifier, in which the step requesting activation of the at least one disabled function from the external server includes the following steps:
- Verification of the identifier of the vehicle by the external server,
- Payment by the at least one user of the vehicle, and
- Verification of the payment made on the basis of the identifier of the vehicle.

This enables the user to access the services of a given function, once an external server has been notified of the related payment. By way of non-limiting example, the identifier of the vehicle includes access to the disabled-function activation log, preferences of the at least one user and/or payment data. There is an evident advantage in paying for and enabling a given function at the time of use, compared to initial payment at the time the new vehicle is purchased. This is particularly relevant for hire cars, where each user can activate the individual functions they require.

There is also an additional step storing the preferences of the user of the vehicle in the storage means.

Advantageously, the method according to the invention includes an additional step checking for at least one update of the at least one disabled function, in which the step checking for at least one update is performed on the basis of the activation request for the at least one disabled function. Consequently, checks for updates are only performed if the request has been made. This helps to optimize data transmission between the external server and the vehicle, since updates are only performed when the function is used. If a user never uses a function, there is no need to use data to update said function. The advantage achieved is to optimize processing resources and data transmission efficiency.

Consequently, the method according to the invention includes an additional step in which at least one update of the at least one disabled function in the vehicle is received from the external server. This provides the user with the most up-to-date, refined, high-tech version offering enhanced data-provision performance.

Additionally, the method includes a step for receiving an additional function in the vehicle, if the additional function was not included in the vehicle. The transmission is made by the external server. Thus, if the vehicle has appropriate sensors, actuators and processing means, the transmission of a new software function enables the vehicle to increase the list of functions available, offering new functionality and/or aids to the at least one user of the vehicle. This provides an advantage over conventional vehicles, which only have the functions acquired at the time the vehicle is purchased.

In a preferred embodiment of the invention, the step activating the at least one disabled function of the vehicle involves enabling the at least one disabled function for a single use and/or for a set time and/or for an indefinite time. This opens up different contracting options, each for a given amount of time, and with an economic cost that is proportional to the time during which the function will be enabled.

More specifically, the steps suggesting activation of the at least one disabled function includes suggesting activation for an indefinite time if the number of activations of the at least one disabled function is greater than a predetermined value. In other words, if a function has been requested multiple times during a given period, the permanent purchase of the function is suggested. In this way, the system "learns" or "remembers" the history of a given user or a given vehicle, enabling the system to more accurately suggest activation and/or enabling of functions and helping the method according to the invention to optimize processing resources. Thus, the plurality of activations may be a plurality of one-off activations and/or activations for a period.

Additionally, the method according to the present invention includes an additional step for deactivating the at least one previously activated disabled function. Such activation may be performed automatically or, alternatively, manually by the at least one user of the vehicle.

More specifically, the step deactivating the at least one disabled function previously activated is based on the identified need of the at least one user of the vehicle, such that if the need of the at least one user of the vehicle has been satisfied, the at least one disabled function previously activated is deactivated.

Thus, the function is deactivated when the processing unit determines that the function is no longer necessary for the user of the vehicle and/or the time paid for has expired. This improves and optimizes vehicle energy consumption and resources, since the functions are disabled when they are no longer necessary, freeing up communication buses.

According to another aspect of the invention, the step receiving authorization to activate the at least one disabled function includes the external server sending at least one encryption code and/or encoded information and/or encryption algorithm and/or decryption key. This makes it possible to communicate with the external server securely and using password protection or similar, ensuring that activation is only possible once the external server has authorized the operation.

Each vehicle has an ID or given identifier that is associated with data such as a log or bank account, for example to facilitate certain payment processes.

In a preferred embodiment of the invention, the step suggesting activation of the at least one disabled function involves displaying information on the at least one graphical display device and/or sending at least one sound signal using at least one audio device. This ensures that the warning to the user of the vehicle is more immediate, facilitating immediate comprehension of the message.

Similarly, the step detecting an activation instruction for the at least one disabled function includes analysing a pulse from at least one actuator, said pulse being physical or virtual in a touchscreen graphical display device, and/or a sound instruction via the at least one audio device.

The invention also includes a system for activating at least one function of a vehicle, in which the system has at least one processing unit, at least one wireless connection means and at least one information transmission means, in which the at least one wireless connection means enables information to be exchanged with an external server, in which the at least one information transmission means enables information to be exchanged with the at least one user of the vehicle, and in which the vehicle has at least one disabled function, in which the at least one processing unit has means designed to execute the steps of the method according to the present invention. Said system offers the advantages and services mentioned above in relation to the activation method of the at least one function of a vehicle. This enables the user of the vehicle to be offered functions involving services or information that could assist with driving. Thus, the user may optionally request activation of same in order to start using the services or to obtain the information available from said function.

The at least one processing unit of the system according to the invention includes storage means, in which the storage means include a plurality of disabled functions of the vehicle.

In a preferred embodiment of the invention, the at least one exchange of the vehicle is in communication with the external server via a wireless connection, which affords great versatility when sending, receiving and transmitting data.

The attached drawings show, by way of non-limiting example, a method and system for activating at least one function of a vehicle, according to the invention. Other features and advantages of said method and system for activating at least one function of a vehicle to which the present invention relates, are set out in the description of a preferred, but non-exclusive, embodiment, which is illustrated by way of a non-limiting example in the attached drawings, in which:

### SHORT DESCRIPTION OF THE FIGURES

Figure 1 is a perspective view of the control panel of a vehicle and of the vehicle user seat, including the system for activating at least one function of a vehicle, according to the present invention.
Figure 2 is a schematic view of the components of the system for activating at least one function of a vehicle, according to the present invention.

### DESCRIPTION OF A PREFERRED EMBODIMENT

In consideration of the numbering adopted, the aforementioned figures show an example preferred embodiment of the invention that includes the parts and elements mentioned and described in detail below.

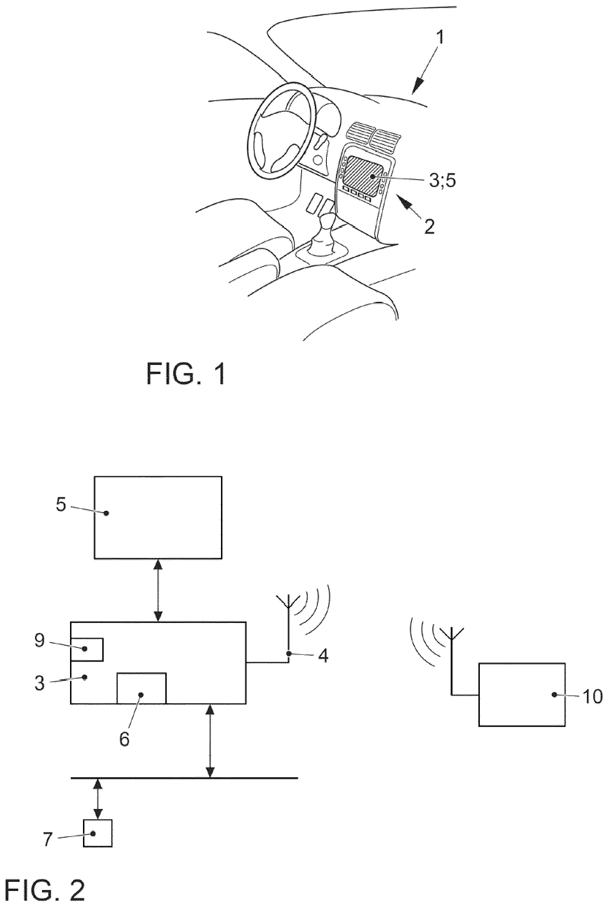

Figure 1 shows the space inside the passenger compartment of a vehicle 1, specifically the seat used by the driver of the vehicle 1. As shown in Figure 1, the instrument panel includes a processing unit 3, with information transmission means 5, for suggesting at least one disabled function 2. Furthermore, said information transmission means 5 enable the user to request activation of the at least one disabled function 2.

Figure 2 is a schematic view of the components of the system for activating at least one function 2 of a vehicle 1. Specifically, Figure 2 shows information transmission means 5 connected to the processing unit 3, which includes an identifier 9 and storage means 6, in which the identifier 9 belongs uniquely to the vehicle 1. The processing unit 3 is also connected to wireless connection means 4 and to a data bus of the vehicle 1, which is used by the processing unit 3 to receive information collected by the at least one sensor 7 of the vehicle 1. The wireless communication between the wireless connection means 4 and an external server 10 are also shown.

By way of a specific non-limiting example, a vehicle 1 with the "navigation" function stored in the storage means 6 is provided. This function is disabled, and therefore cannot be used by the customer. The method according to the present invention enables said navigation function 2 to be enabled, as well as making an active suggestion when the system determines that the at least one user of the vehicle 1 requires said functionality. Thus, in order to enable the "navigation" function 2, the customer must pay to activate same, said payment being for a specific use, for a period or for an indefinite time. In an initial step, an external server 10 verifies the payment for use of the "navigation" function 2 and enables the use of same. Consequently, the vehicle 1 requires at least one processing unit 3 with wireless connection means 4 to exchange information with said external server 10.

Therefore, the method according to the present invention includes a vehicle 1 that has at least one disabled function 2, at least one processing unit 3 (that includes wireless data transmission means, or wireless connection means 4), and at least one ID number or identifier 9 that is unique and exclusive to each vehicle 1, which facilitates operations, such as payments, as indicated above in the description. There must also be an external server 10 that authorizes the enabling of functions 2 for all vehicles, following payment. Said external server 10 also processes the functions that other vehicles are enabling, with a view to suggesting said functions to the vehicle 1.

External server 10 means a system that is separate from the vehicle and that includes processing and storage means, as well as communication means designed to authorize activation of the at least one disabled function 2, verify a payment for activating the at least one disabled function 2, update information and software of the at least one function 2, and compare and store activation of functions implemented by a plurality of vehicles 1.

Accordingly, the method according to the present invention includes, but is not limited to, the following actions:
- Capturing information regarding the vehicle 1, the environment around the vehicle 1 and the user of the vehicle 1,
- Processing the information captured in order to identify an unsatisfied need of the at least one user,
- Suggesting activation of a disabled function 2, on the basis of the information processed,
- Capturing acceptance by the driver or user of the vehicle 1 of the intention to activate the function 2,
- Exchanging information with an external server 10, such as the request to activate the at least one disabled function 2, the payment request, or the payment verification,
- Sending signals intended to enable the disabled function 2, and
- Activating the function 2 so that the at least one user can use the at least one disabled function 2.

By way of example, the at least one disabled function 2 may be, but is not limited to, the following: predictive navigation, rear-seat entertainment system, front passenger seat entertainment system, full-link connection technology between smartphone and vehicle, door and window control, enabling of a Wi-Fi hotspot network, parking space localization assistance system, parking assistance system, lane-change assistance, dynamic light change assistance, traffic jam driving assistance , adaptive speed control, blind-spot detection assistance, personalized seat positioning, rear-view mirrors, covers for graphical display devices in the vehicle, ambient light control, selection of driving mode and vehicle air-conditioning system.

According to the example cited above, the vehicle 1 has the navigation function 2 disabled. Consequently, the vehicle 1 has the technology required for the function 2 to be executed correctly. Nonetheless, the navigation function 2 is inactive and the user of the vehicle 1 is not permitted to access same.

The method according to the present invention determines, in a first step, that the at least one user of the vehicle 1 requires the navigation function 2. This step is carried out by analysing the signal of at least one sensor 7 of the vehicle 1, such as the temperature signal, the occupancy sensor 7, the tiredness sensor 7, navigation, etc. and/or analysing a datum from outside the vehicle 1, such as traffic information, free parking space information, time prediction, etc. and/or analysing a state of at least one user of the vehicle 1, such as a state of mind, position of the user (inside or outside the vehicle), heart rate, etc.

Thus, if the method according to the present invention analyses traffic information and observes that the route ahead of the vehicle 1 is very slow, it determines a need to change the normal route followed by the vehicle 1 in order to avoid the slow traffic zone.

The functions 2 being activated by other vehicles in similar situations can also be analysed by the system according to the present invention. In other words, if a nearby vehicle activates a given function 2, said information is known to the external server 10 and supplied to the system in the vehicle 1. Consequently, the external server 10 can also perform the function of supplying information to identify the need of at least one user. In this way, the method according to the present invention is able to predict the at least one need of the at least one user of the vehicle 1.

Thus, the external server 10 determines that a plurality of second vehicles are activating the navigation function, said plurality of second vehicles being on the route of the vehicle 1. Consequently, the external server 10 anticipates the need of the user of the vehicle 1 and provides this information to the control unit 3 of the vehicle 1.

This information received from the external server 10 and/or the information received from the plurality of sensors 7 is evaluated to determine whether any of the disabled functions 2 in the vehicle 1 are able to satisfy the need identified. In this case, the system determines that activation of the navigation given function 2 would satisfy the need identified, and activation of the navigation function 2 is suggested to the user of the vehicle 1 as a result.

Predicting the need of the at least one user includes an alternative and complementary method, in addition to the aforementioned method, based on an activation log of the at least one disabled function 2. Thus, if the vehicle determines that the user, finding himself repeatedly in a traffic jam, requests activation of the navigation function 2, the system is able to predict said need and to suggest activation of the function 2, advantageously anticipating said need.

The vehicle suggests activation of the disabled function 2 via information transmission means 5, for example a graphical display device of the vehicle 1 or an audio system of the vehicle 1. As a result, the at least one user receives said suggestion and evaluates his own need.

Thus, if the user accepts the suggestion and decides to activate the disabled navigation function 2, the method identifies an instruction issued by the user, either via the touchscreen graphical display device, or via voice control, or by an equivalent means.

Once it has been determined that the user is requesting activation of the navigation function 2, a request to activate the navigation function 2 is made to an external server 10. The step requesting activation of the at least one disabled function 2 by the external server 10 involves the following steps: verification of the identifier 9 of the vehicle 1 by the external server 10, the at least one user of the vehicle 1 making a payment, and verification by the external server 10 that the payment has been made using the identifier 9 of the vehicle 1. Accordingly, the user authorizes a payment to activate the navigation function 2 and requests that the external server 10 enable said function. This request may be for a one-off use and/or for a set time and/or for an indefinite time. Thus, the user can use the navigation function 2 until arrival at the destination set, or for a set period of time according to the amount paid, and/or enable the navigation function 2 indefinitely, such that same is not disabled again in the future.

Additionally, the method according to the present invention checks for at least one update of the navigation function 2, such that when the user requests activation of the navigation function 2, the external server 10 checks that the version installed on the vehicle 1 is the most recent version, or whether the version is an old version and there are updates for the navigation function 2. Thus, the external server 10 enables the vehicle 1 to always have the latest version of the disabled functions 2. In the specific case of the navigation function 2, the vehicle 1 receives the latest available version of the maps or the latest modifications made to the navigation function 2 from the external server 10.

Updates may be installed before the navigation function 2 is activated, if same is rapid and/or if the user's need has to be satisfied as a priority. Conversely, the disabled function 2 may be installed after activation of same, if the user's need for the function 2 is instantaneous and/or the update cannot be made before activation. The objective is to ensure that the function 2 is available to the user when the need arises.

Advantageously, the step suggesting activation of the at least one disabled function 2 includes suggesting activation for an indefinite time if the number of activations of the at least one disabled function 2 is greater than a predetermined value.

According to a preferred embodiment of the invention, as illustrated in Figures 1 and 2, the method includes an additional step deactivating the at least one navigation function 2 and, according to a preferred embodiment, the navigation function 2 is deactivated once the system has detected that the need has been satisfied and the navigation function 2 is no longer required. This could be when the vehicle 1 is known to have reached the destination on the route planned. Deactivation is preferably automatic, but may alternatively be manual.

The external server 10, which sends information to the vehicle 1 using any wireless information transmission system, is used to check the payment requested by the at least one user of the vehicle 1. To do so, the vehicle 1 includes a unique identifier 9, which includes relevant identification information, both relating to the vehicle 1 and to at least one user. One of the data related to the identifier 9 is a unique identification number of the vehicle 1, a bank account associated with the at least one user of the vehicle 1, a log or preferences of the at least one user of the vehicle 1. Furthermore, the external server 10 sends at least one encryption code and/or encoded information and/or encryption algorithm and/or decryption key to be implemented by the vehicle 1, and the at least one user can activate the navigation function 2 requested.

Moreover, the graphical display device may be a screen of the vehicle 1 or a screen of the smartphone, while the audio device may be an audio device of the vehicle 1 or an audio device of the smartphone. It should be noted that communication may also be effected outside the vehicle 1, for example the user could enable the climate-control system while at home. This enables the temperature of the vehicle 1 to be set before the user enters the vehicle 1. Equally and according to the above example, if many users in the residential zone near to the user activate the climate-control system, the method according to the present invention suggests, via the smartphone, the option of activating this function 2, given that a plurality of users in the immediate vicinity are activating said function 2.

As shown in Figures 1 and 2, the present invention also relates to a system for activating at least one function 2 of a vehicle 1, in which the system has at least one processing unit 3, at least one wireless connection means 4 and at least one information transmission means 5, in which the at least one wireless connection means 4 enables information to be exchanged with an external server 10, in which the at least one information transmission means 5 enables information to be exchanged with the at least one user of the vehicle 1, and in which the vehicle 1 has at least one disabled function 2, in which the at least one processing unit 3 has means designed to execute the steps of the method according to the present invention.

The description makes reference to a specific navigation function 2. This reference is purely a non-limiting example, and the method according to the present invention may be activated for any other function suitable for the vehicle 1.

The details, forms, dimensions and other additional elements, as well as the components used to implement the method and system for activating at least one function of a vehicle may be replaced using other such appropriate elements that are technically equivalent, without thereby departing essentially from the invention or the scope defined by the claims included after the list below.

### List of reference signs:

- 1: Vehicle
- 2: Function
- 3: Processing unit
- 4: Wireless connection means
- 5: Information transmission means
- 6: Storage means
- 7: Sensor
- 8: Activation threshold
- 9: Identifier
- 10: External server

## Claims

1. Method for activating at least one function of a vehicle (1), in which the vehicle (1) has at least one disabled function (2), and in which the activation method includes the following steps:
- Identifying at least one need of at least one user of the vehicle (1),
- Evaluating activation of the at least one disabled function (2),
- Suggesting activation of the at least one disabled function (2) if activation of the at least one disabled function (2) satisfies the at least one identified need of the at least one user,
- Determining an activation instruction for the at least one disabled function (2), in which the activation instruction is generated by the at least one user,
- Requesting activation of the at least one disabled function (2) from an external server (10),
- Receiving authorization to activate the at least one disabled function (2), in which authorization is issued by the external server (10), and
- Activating the at least one disabled function (2) of the vehicle (1).

2. Method according to Claim 1, **characterized in that** the step identifying at least one need of at least one user of the vehicle (1) involves analysing a signal from the at least one sensor (7) of the vehicle (1) and/or analysing at least one datum from outside the vehicle (1) and/or analysing a state of at least one user of the vehicle (1).

3. Method according to any one of the preceding claims, **characterized in that** the step identifying at least one need of at least one user of the vehicle (1) also involves predicting the at least one need of the at least one user of the vehicle (1).

4. Method according to Claim 3, **characterized in that** the at least one need of the at least one user of the vehicle (1) is predicted on the basis of activation of at least one disabled function (2) by at least one second vehicle, in which activation of at least one disabled function (2) by the at least one second vehicle is supplied by the external server (10).

5. Method according to Claim 3, **characterized in that** the at least one need of the at least one user of the vehicle (1) is predicted on the basis of an activation log of the at least one disabled function (2) of the vehicle (1).

6. Method according to any one of the preceding claims, **characterized in that** the vehicle (1) includes an identifier (9), in which the step requesting activation of the at least one disabled function (2) from the external server (10) includes the following steps:
- Verification of the identifier (9) of the vehicle (1) by the external server (10),
- Payment by the at least one user of the vehicle (1), and
- Verification of the payment made on the basis of the identifier (9) of the vehicle (1).

7. Method according to any one of the preceding claims, **characterized in that** it includes an additional step checking for at least one update of the at least one disabled function (2), in which the step checking for at least one update is performed on the basis of the activation request for the at least one disabled function (2).

8. Method according to Claim 7, **characterized in that** it includes an additional step in which at least one update of the at least one disabled function (2) in the vehicle (1) is received from the external server (10).

9. Method according to any one of the preceding claims, **characterized in that** the step activating the at least one disabled function (2) of the vehicle (1) involves enabling the at least one disabled function (2) for a single use and/or for a set time and/or for an indefinite time.

10. Method according to Claim 9, **characterized in that** the step suggesting activation of the at least one disabled function (2) includes suggesting activation for an indefinite time if the number of activations of the at least one disabled function (2) is greater than a predetermined value.

11. Method according to Claim 1, **characterized in that** it includes an additional step deactivating the at least one disabled function (2) previously activated.

12. Method according to Claim 11, **characterized in that** the step deactivating the at least one disabled function (2) previously activated is based on the identified need of the at least one user of the vehicle (1), such that if the need of the at least one user of the vehicle (1) has been satisfied, the at least one disabled function (2) previously activated is deactivated.

13. Method according to any one of the preceding claims, **characterized in that** the step receiving authorization to activate the at least one disabled function (2) includes the external server (10) sending at least one encryption code and/or encoded information and/or encryption algorithm and/or decryption key.

14. Method according to any one of the preceding claims, **characterized in that** the step suggesting activation of the at least one disabled function (2) involves displaying information on the at least one graphical display device and/or sending at least one sound signal using at least one audio device.

15. System for activating at least one function of a vehicle (1), in which the system has at least one processing unit (3), at least one wireless connection means (4) and at least one information transmission means (5), in which the at least one wireless connection means (4) enables information to be exchanged with an external server (10), in which the at least one information transmission means (5) enables information to be exchanged with the at least one user of the vehicle (1), and in which the vehicle has at least one disabled function (2), in which the at least one processing unit (3) has means designed to execute the steps of the method in Claim 1.
